# EUROPEAN PATENT APPLICATION

(11) **EP 0 660 254 A1**
(43) Date of publication of application: **28.06.1995**
(21) Application number: 93120141.2
(22) Date of filing: 14.12.1993
(51) Int. Cl.: G06K 7/10

(54) **Reading apparatus and reading method of two-dimensional code data**

(71) Applicant: Yoshida, Hirokazu, Osaka-shi, Osaka 543 (JP)
(72) Inventor: Yoshida, Hirokazu, Osaka-shi, Osaka 543 (JP)
(74) Representative: Lehn, Werner, Dipl.-Ing.

(57) **Abstract**

To simplify the data reading apparatus of two-dimensional code data, a line sensor detection unit (30) for reading two-dimensional data is an optical fiber band cable (3) bundling multiple optical fibers (31) of specified diameter in a band, and its upper end side is connected to a line sensor element (2) unit incorporated in the reading apparatus (S), and the lower end side is disposed opposite to an opening (11) in a specified size in the region of one or plural two-dimensional code data in the bottom of the reading apparatus (S). The line sensor detection unit (30) of the optical fiber band cable (3) is disposed reciprocally parallel along the surface to be detected in its orthogonal direction, and the line sensor detection unit (30) is set movable within the range of the opening (11), and a detection unit moving device (4) is disposed so as to read two-dimensional code data. Accordingly, recorded data of two-dimensional code data can be read by the line sensor for reading one-dimensional data, and the product cost of the reading apparatus of the two-dimensional data can be reduced, so that a high reading precision can be maintained.

## Description

### TECHNICAL FIELD OF THE INVENTION

The present invention relates to a reading apparatus and reading method of two-dimensional code data, for example, to a reading apparatus and reading method of two-dimensional information recorded in information recording code of two-dimensional code for recording in two dimensions like matrix code composing the data region in matrix or stack code composing bar codes in multiple layers.

### BACKGROUND OF THE INVENTION

As a reading apparatus of two-dimensional code, the constitution of shaking laser light vertically and laterally by a reflector or the like to move the detecting position two-dimensionally, and reading out substantially two-dimensional code data is known. In such apparatus, however, because of the structure of shaking the reflector at high speed, problems occur in maintenance and precision.

Also as the reading apparatus of two-dimensional code data, it may be considered to take the paper recording two-dimensional code data by camera, and to read the area as a surface, but due to peripheral error of the camera or if the reading diagonal angle is not at right angle to the recorded two-dimensional code, an error occurs in image processing technology due to optical error, and the correction algorithm for image processing of two-dimensional code data possessed by the apparatus is complicated, and the memory capacity for image processing is increased, which causes to increase the price.

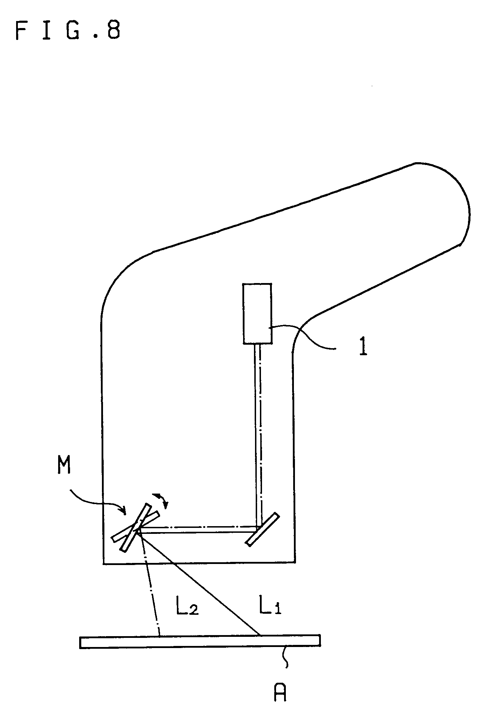

Accordingly, by using line sensor and moving the detecting position so that the relative moving direction of two-dimensional code data and line sensor may be in the orthogonal direction, problems of optical error due to camera taking may be solved. As such means, as shown in Fig. 8, when processing the image of two-dimensional code data by optical means M such as lens and mirror, since the distances of optical ray paths L₁ and L₂ are not equal to each other, a constitution may be considered to vary the positional relation of the detection ray from the paper A recording two-dimensional code data and the incident ray to a line sensor element 1.

That is, since the optical detection angle varies, when the total length of the detection ray and incident ray to the sensor element varies depending on the optical means M, a difference is caused between the distance of ray path L₁ and distance of ray path L₂, thereby producing a difference between the distance of ray path L₁ and distance of ray path L₂ of the data region, and therefore the size and width of the data region are no longer uniform, which took much labor in correction of data of the two-dimensional data code entering the memory for image processing.

The invention is intended to solve the problems in maintenance and precision in the method of reading two-dimensional data and perform image processing of two-dimensional code data by a simple algorithm, by moving the detecting position so that the relative moving direction of the paper recording the two-dimensional code data and line sensor may be in the orthogonal direction, and entering the image data in the memory in two dimensions.

### SUMMARY OF THE INVENTION

It is hence a primary object of the invention to present a recording apparatus and reading method of two-dimensional code data for reading two-dimensional code data such as matrix code composing the data region in matrix form or stack code composing bar codes in multiple lyers, wherein a line sensor detection unit for reading the two-dimensional code data is constituted as an optical fiber band cable having multiple optical fibers with specified diameter joined in a band form, one end side there of is connected to a line sensor element unit incoporated in the reading apparatus, while the other end side is disposed against the opening made in a specified size in the reading apparatus, the line sensor detection unit of optical fiber band cable is disposed so as to be free to move reciprocally parallel along the surface to be detecte in its orthogonal direction, and a detection unit moving device is disposed so as to move the line sensor detection unit within the range of the opening and to read the two-dimensional code data by the unit, whereby the recording data of two-dimensional code data can be read two-dimensionally by using a line sensor for reading one-dimensional data.

In other object of the invention, the lower end portion of the optical fiber band cable of the line sensor detection unit is fixed by a fiber support, the fiber support is fitted into a sliding guide, and the detection unit moving device is disposed so that the line sensor detection unit may move reciprocally in the opening of the bottom of t eh reading apparatus along the sliding guide, whereby the two-dimensional code data is read, so that the two-dimensional code data of the surface to be detected can be read securely and precisely.

In another object of the invention, a lighting device is disposed in the reading apparatus, and the surface to be detected confronting to the line sensor detection unit is illuminated by the lighting device, so that the surface to be detected is lit with a uniform illumination, thereby eliminating reading errors.

In a different object of the invention, a light emitting diode is disposed in the peripheral edge of the opening of the reading apparatus, and the reading position and reading range of the reading apparatus are indicated and read, so that the reading position and reading range of the two-dimensional code data may be clearly read.

In a further different object of the invention, the interval of optical fibers of the optical fiber band cable of the line sensor detection unit is read as the distance of dividing the interval of the data regions of the two-dimensional code by a specific number, so that the two-dimensional code data may be promptly and securely read by a one-dimensional line sensor.

These and other benefits of the invention will be better appreciated and understood in the following detailed description.

### BRIEF DESCRIPTION OF DRAWINGS

Fig. 1 is a longitudinal sectional view of a reading apparatus of two-dimensional code data showing an embodiment of the invention;
Fig. 2 is a longitudinal sectional view of a lighting device and a detection unit moving device of the same;
Fig. 3 is a cross sectional view of the detection unit moving device of the same;
Fig. 4 is a longitudinal sectional view of the lower end portion of an optical fiber band cable and the detection unit moving device of the same;
Fig. 5 is a partially cut-away plan of the surface to be detected of the paper to be detected on which two-dimensional code data is recorded of the same;
Fig. 6 is a longitudinal view in a state equivalent to Fig. 2, except that the lighting device is omitted by making use of the room light, in other embodiment of the same;
Fig. 7 is a longitudinal sectional view corresponding to Fig. 2, showing a different embodiment of the lighting device of the same, in which diagram (a) refers to the case of installing a tubular lens acting on the lower end portion of the optical fiber band cable, and (b) is a sectional view showing the apparatus installing a lighting device and a tubular lens acting on the lower end portion of the optical fiber band cable; and
Fig. 8 is an explanatory diagram for optical error in a reading apparatus of two-dimensional code data using a movable mirror considered in the conventional system.

### DETAILED DESCRIPTION OF THE INVENTION

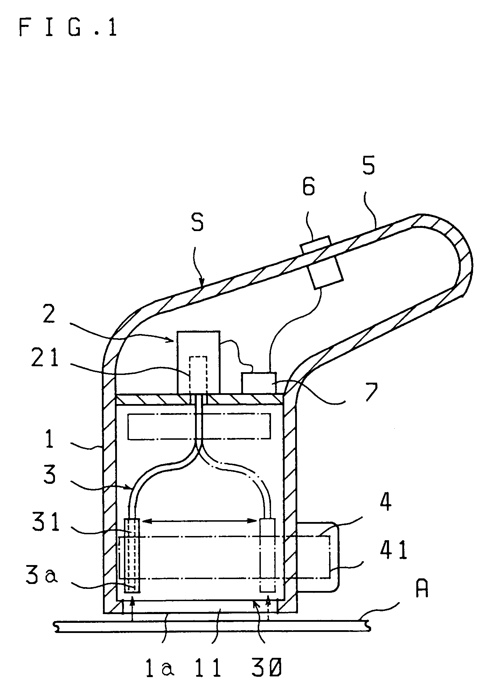

Referring now to the drawings, some of the embodiments of the invention are described in detail below. Fig. 1 through Fig. 6 show embodiments of the invention. With referrence to Fig. 1 through Fig. 4, a two-dimensional code data reading apparatus S is of movable handy scanner type for portable use, in which numeral 1 denotes a box-shaped case, and an opening 11 in a specified size capable of reading one or plural two-dimensional code data is provided in its bottom 1a. Numeral 2 shows a line sensor element unit , and multiple sensor elements 21 of CCD are arranged in vertical rows in the upper half of the case 1.

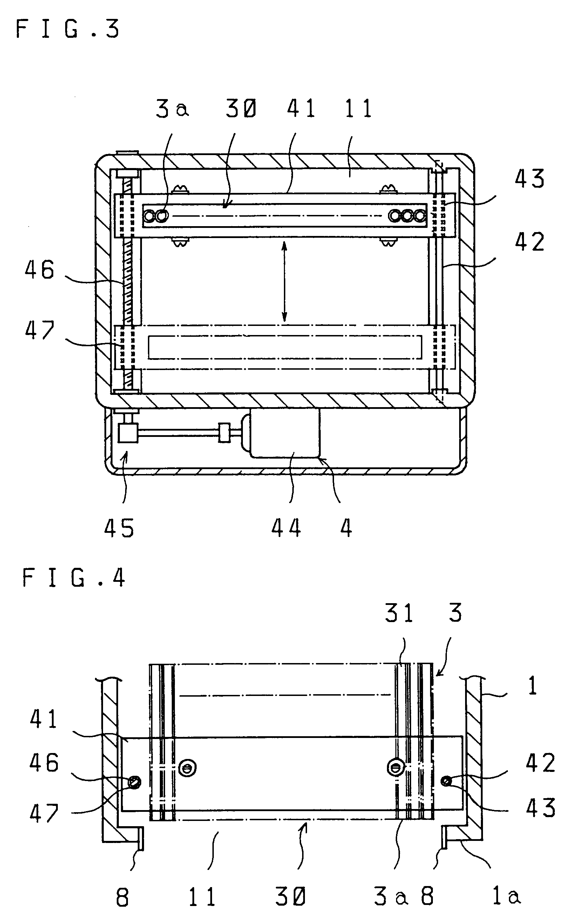

Numeral 3 is an optical fiber band cable, and multiple optical fibers 31 in specified diameter are joined adjacently in vertical rows to form a band as shown in Fig. 3 and Fig. 4. As shown in Fig. 1, the upper end of each optical fiber 31 is connected to the sensor element 21 of the line sensor element unit 2, and the lower end 3a of each optical fiber 31 is set against the opening 11 of the bottom 1a of the case 1, and the optical fibers 31 are put in the case 1, and recording data is entered from the lower end surface 3a of each optical fiber 31 consecutively adjacent in line, and it is detected by a line sensor detection unit 30.

As shown in Fig. 3, a detection unit moving device 4 is disposed so as to move the lower end surface 3a of the optical fiber band cable 3 of the line sensor detection unit 30, reciprocally parallel to the surface to be detected in the orthogonal direction of the optical fiber band cable 3, in the range of the opening 11 of the bottom 1a. As shown in Fig. 1 through Fig. 4, the lower end surface 3a of each optical fiber 31 of the line sensor detection unit 30 is supported by a fiber support 41, a guide hole 43 opened in the side part of the fiber support 41 is fitted in the guide 42 of a guide shaft fixed at one side of the case 1, so that the lower end surface 3a of the optical cable 3 is free to move in the direction of the guide 42, that is, in the direction orthogonal to the optical fiber band cable 3. The interval of the optical fibers 31 is preferred to be about 1/1 to 1/5 of the interval of the mark elements (pixel marks of dots, etc.) composing the data in each data region of two-dimensional code, so that the presence or absence of data entering from the optical fibers 31 can be judged by the sensor elements 21 of the line sensor element unit, and be easily processed digitally.

Thus, as shown in Fig. 3, a screw shaft 46 is coupled to an transmitting mechanism 45 connected to a servo motor 44 incorporated in the case 1, a screw 47 penetrating into the fiber support 41 at the other end is screwed onto the screw shaft 46, and power feeding to the servo motor 44 is controlled by a control unit 7 (including batteries and controlling device) to rotate the servo motor 44 in normal direction at specified speed, and then rotate in reverse direction, thereby moving the line sensor detection unit 30 reciprocally in the case 1. The moving speed of the line sensor detection unit 30 can be raised to a high speed within an extent to be judged by the line sensor element unit 2, but, as required, the reading speed can be enhanced by maintaining at a specific low speed.

On the peripheral edge of the opening 11 of the bottom 1a of the case 1, a light emitting diode 8 is disposed as shown in Fig. 4, and the reading position and reading range of the reading device S are clarified, so that the reading apparatus S may be positioned accurately. Besides, if necessary, a transparent acrylic resin plate or the like may be disposed around the opening 11, so that the reading region may be visually seen.

In the embodiment, the guide shaft 42, guide hole 43, screw shaft 46, and screw 47 are disposed at one side of the line sensor detection unit 30, but they may be also possible to constitute, needless to say, to decrease oscillation in moving of the fiber support 41 by disposing in vertical arrangement or in a pair of both sides. As the screw drive unit, other known driving means such as magnetic actuator driven by an electromagnet may be used.

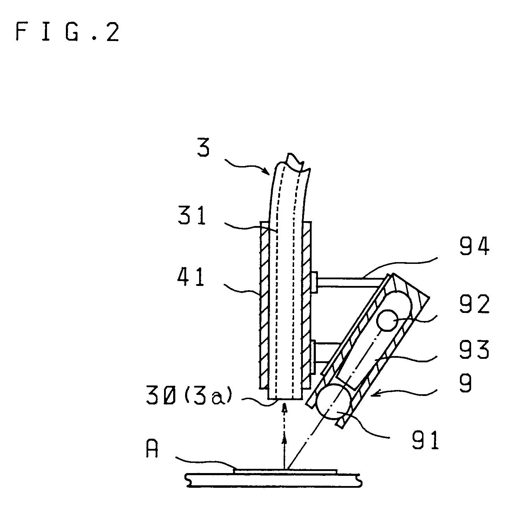

As shown in Fig. 2, the lighting device 9 is fixed to the fiber support 41 of the detection unit moving device 4 through a fixing element 94, opposite to the line sensor detection unit 30. By the detection unit moving device 4, the lighting device 9 is moved together with the lower end portion of the optical fiber 31, and the degree of illumination of the rayentering the lower end surface of the optical fiber 31 is set almost constant in the whole range of the surface to be detected. In the embodiment in Fig. 2, the lighting device 9 is composed of a tubular light source (for example, a tubular discharge tube) 92 nearly equal to the width of the optical fiber band cable 3 or slightly longer (wider), and a tubular lens 91 built in a light source case 93. As the light source, laser light, light emitting diode, lamp or the like may be used, and the wavelength is not particularly limited.

A handle 5 is projecting obliquely above the case 1 as shown in Fig. 1, and it is constituted to read two-dimensional code data by manual operation, or instead of the handle 5, the upper part of the case 1 may be supported by a proper fixing member. Numeral 6 is an operation switch for manual type of input operation start, and the detection unit moving device 4 is controlled through the controlling device of the control unit 7, and the controlling device of the control unit 7 is designed to transmit the output of the line sensor element unit 2 to the outside by wire or by wireless.

In reading, the operator holds the handle 5 of the reading apparatus S by one hand, and the opening 11 of the bottom 1a of the reading apparatus S is brought close to the paper A recording two-dimensional code data glued on the merchandise or thelike as shown in Fig. 1. This is same as data reading of conventional one-dimensional code data such as bar code. At this time, as shown in Fig. 4, from the light emitting diode 8 disposed on the peripheral edge of the opening 11 of the bottom 1a, the guide ray showing the reading range of the reading apparatus S is emitted, and one or plural two-dimensional code data B on the paper A on which is recorded the two-dimensional code data of the surface to be detected glued on the merchandise can be easily positioned inside the opening 11, in the detection range of the line sensor detection unit 30.

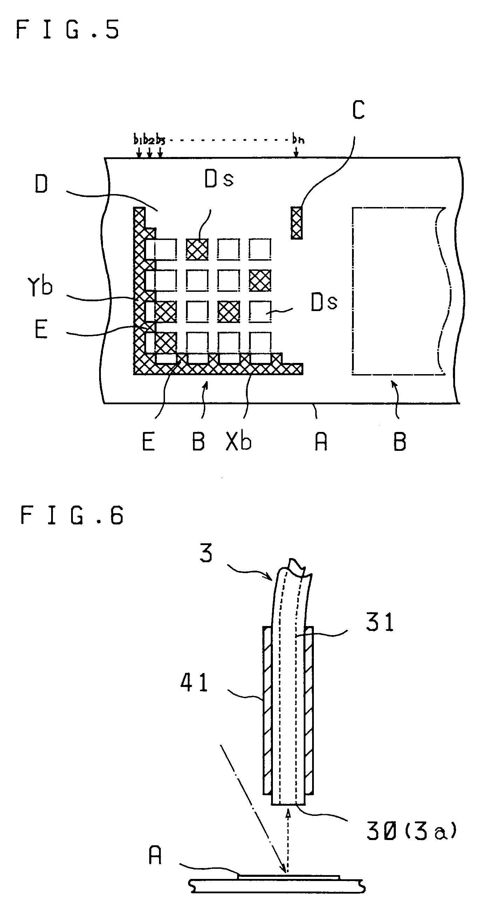

When the detection unit moving device 4 is driven by pushing the operation switch 6, the lower end surface 3a of the optical fiber 31 of the line sensor detection unit 3 moves parallel at a specific speed on the paper A of the surface to be detected in the orthogonal direction to the line sensor detection unit 3. The two-dimensional code data B of the paper A recording the two-dimensional data is sequentially entered from b₁ to b₂, b₃, . . . , bn into the line sensor element unit 2 as shown in Fig.5, and the two-dimensional image data of the memory of the reading apparatus S can be entered by using the line sensor for image detection of one-dimensional line, so that two-dimensional data can be read by one-dimensional line sensor.

The two-dimensional code of the embodiment is recorded in the data area D enclosed by X-axis reference line Xb, Y-axis reference line Yb, and corner mark C as shown in Fig.5. As shown in the diagram, division marks E are provided at specific intervals in the X-axis reference line Xb and Y-axis reference line Yb, and binary codes (for example, black and white (blank) marks) may be entered in the small division area Ds enclosed by extending these division marks E, so that the two-dimensional code data can be recorded. The two-dimensional code is not limited to this embodiment alone, and it can be applied to other known matrix codes and stack bar codes, etc.

By omitting the lighting device 9 in the embodiment, the purpose of the invention can be achieved, and in this case, if the illumination of the paper A recording the two-dimensional code data on the surface to be detected is insufficient or varies, reading errors may occur, and hence room illumination for the surface to be detected must be considered.

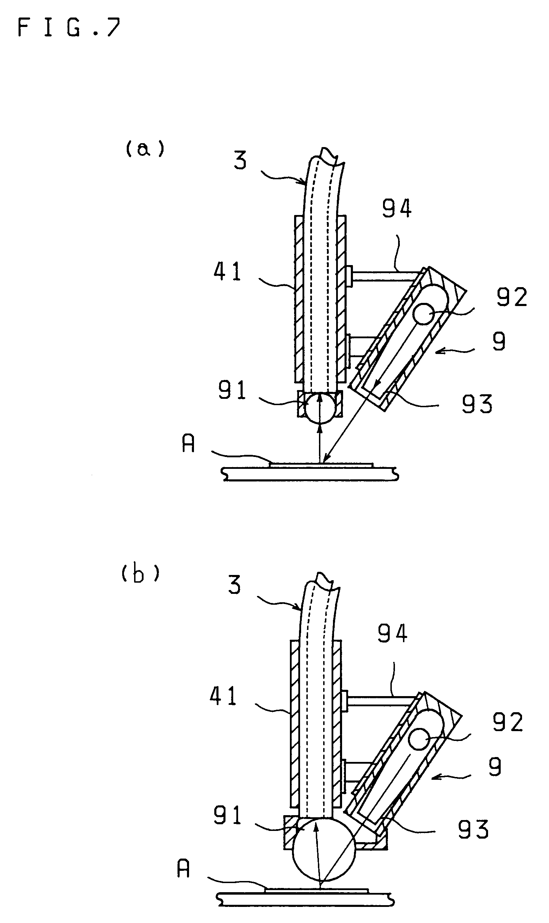

Moreover, by installing the tubular lens 91 in the ray path between the light source 92 of the lighting device 9 and the lower end surface 3a of the optical fiber 31 of the line sensor detection unit 3 as stated above, the intensity of the illumination ray entering the line sensor detection unit 3 can be heightened, but the position of the tubular lens 91 is not limited to the form to act on the illumination ray to the paper A on the surface to be detected by incorporating in the lighting device 9 as shown in Fig. 2, but as shown in Fig.7 (a), (b), it may be also disposed to act only on the reflected light from the paper A on the surface to be detected (Fig. (a)), or act on both the illuminating ray to the paper A on the surface to be detected and on the reflected ray from the paper A on the surface to be detected (Fig. 7(b)).

Various embodiments are presented about the invention, and other modifications and changes may be properly executed by those skilled in the art within the spirit and scope of the invention described herein.

Thus, in the invention, the end surface of the optical fiber band cable which is the line sensor detection unit is moved in the orthogonal direction, and two-dimensional code data is entered and read from the paper recording the two-dimensional code data, and the two-dimensional code data can be read by a simple mechanism of one-dimensional line sensor, and therefore the sensor device of two-dimensional code data can be simplified and the cost can be reduced, and data image processing can be done by a simple algorithm.

By moving the line sensor detection unit (end surface of the optical fiber band cable) disposed one-dimensionally by the detection unit moving device, the image can be read two-dimensionally, and the distance between the line sensor detection unit and the surface to be detected (the paper on which two-dimensional code data is recorded) can be always maintained constant, so that two-dimensional code data can be read precisely. Besides, as required, the moving speed of the line sensor detection unit can be maintained at a constant low speed, and the reading precision can be enhanced. Accordingly, it solves the problems in the conventional method of moving the reading position of the line sensor by optical means, or the laser ray method.

## Claims

1. A recording apparatus of two-dimensional code data for reading two-dimensional code data such as matrix code composing the data region in matrix form or stack code composing bar codes in multiple layers,
wherein a line sensor detection unit (30) for reading the two-dimen-sional code data (B) is constituted as an optical fiber band cable (3) having multiple optical fibers (31) with specified diameter joined in a band form, one end side thereof is connected to a line sensor element (21) unit incorporated in the reading apparatus (S), while the other end side is disposed against the opening (11) made in a specified size in the reading apparatus (S),
the line sensor detection unit (30) of optical fiber band cable (3) is disposed so as to be free to move reciprocally parallel along the surface to be detected in its orthogonal direction, and a detection unit moving device (4) is disposed so as to move the line sensor detection unit (30) within the range of the opening (11) and to read the two-dimensional code data (B) by the unit (30).

2. A recording apparatus of two-dimensional code data of claim 1, wherein the lower end portion of the optical fiber band cable (3) of the line sensor detection unit (30) is fixed by a fiber support (41), the fiber support (41) is fitted into a sliding guide (42), and the detection unit moving device (4) is disposed so that the line sensor detection unit (30) may move reciprocally in the opening (11) of the bottom of the reading apparatus (S) along the sliding guide (42).

3. A recording apparatus of two-dimensional code data of claim 1, wherein a lighting device (9) is disposed in the reading apparatus (S), and the lighting device (9) is disposed opposite to the surface to be detected so as to illuminate the surface to be detected to which the line sensor detection unit (30) confronts, by the lighting device (9).

4. A recording apparatus of two-dimensional code data of claim 3, wherein a lens (9) is installed in the ray path between the line sensor detection unit (30) and the lighting device (9).

5. A recording apparatus of two-dimensional code data of claim 1, wherein a light emitting diode (8) for indicating the reading position and reading range of the reading apparatus (S) is disposed around the peripheral edge of the opening (11) of the reading apparatus (S).

6. A recording apparatus of two-dimensional code data of claim 1, wherein the interval of optical fibers (31) of the optical fiber band cable (3) of the line sensor detection unit (30) is a distance of the interval of the mark elements composing the data in the data region of two-dimensional code divided by a specific number.

7. A recording apparatus of two-dimensional code data of claim 6, wherein the specific number is in a range of 1 to 5.

8. A recording apparatus of two-dimensional code data of claim 1, wherein the reading apparatus (S) is of movable small type for portable use, such as handy scanner.

9. A reading method of two-dimensional code data for reading two-dimensional code data such as matrix code composing data region in matrix form or stack code composing bar codes in multiple layers,
wherein the line sensor detection unit (30) is connected to the line sensor element unit (21) as optical fiber band cable (3) bundling multiple optical fibers (31) of specified diameter in a band, and one end side is opposite to the opening (11) made in a specified size in the region of one to plural two-dimensional code data of the reading apparatus (S), and
the line sensor detection unit (31) of the optical fiber band cable (3) is moved reciprocally in the range of the opening (11), parallel along the surface to be detected in the orthogonal direction, thereby reading one to plural two-dimensional code data.

10. A reading method of two-dimensional code data of claim 9, wherein the lower end portion of the optical fiber band cable (3) of the line sensor detection unit (30) is fixed by a fiber support (41), and the line sensor detection unit (30) is moved reciprocally in the opening (11) in the bottom of the reading apparatus (S), thereby reading the two-dimensional code data (B) sequentially.

11. A reading method of two-dimensional code data of claim 9, wherein a lighting device (9) is disposed in the reading apparatus (S), and the surface to be detected to which the line sensor detection unit (30) confronts is illuminated by the lighting device (9), and the two-dimensional code data (B) is read sequentially.

12. A reading method of two-dimensional code data of claim 11, wherein the line sensor detection unit (30) is illuminated by the lighting device (9) through a lens (91), and the two-dimensional code data (B) is read by the line sensor detection unit (30).

13. A reading method of two-dimensional code data of claim 9, wherein the reading position and reading range of the reading apparatus are indicated by the light emitting diode (8) from the peripheral edge of the opening (11) of the reading apparatus (S), and the reading apparatus is moved to that position, thereby reading the two-dimensional code data (B).

14. A reading method of two-dimensional code data of claim 9, wherein the interval of optical fibers (31) of the optical fiber band cable (3) of the line sensor detection unit (30) is a distance of dividing the interval of the mark elements for composing the data in the data region of two-dimensional code by a specified number, and the presence or absence of the two-dimensional code entered from each optical fiber (31) is judged by the line sensor elements (21), thereby reading the two-dimensional code data (B).

15. A reading method of two-dimensional code data of claim 9, wherein the reading apparatus (S) is of movable small type for portable use such as handy scanner, and the reading apparatus is moved by manual operation to read the two-dimensional code data (B) .
